# EUROPÄISCHE PATENTSCHRIFT

(11) **EP 0 673 319 B1**
(45) Veröffentlichungstag und Bekanntmachung des Hinweises auf die Patenterteilung: **25.09.1996**
(21) Anmeldenummer: 94901916.0
(22) Anmeldetag: 30.11.1993
(51) Int. Cl.: B41M 3/14

(54) **VERWENDUNG VON INTERFERENZPIGMENTEN ZUR HERSTELLUNG VON FÄLSCHUNGSSICHEREN WERTSCHRIFTEN**
USE OF INTERFERENCE PIGMENTS IN THE MANUFACTURE OF FORGERY-PROOF SECURITIES
UTILISATION DE PIGMENTS D'INTERFERENCE DANS LA FABRICATION DE TITRES INFALSIFIABLES

(30) Priorität: 11.12.1992 DE 4241753
(43) Veröffentlichungstag der Anmeldung: 27.09.1995
(73) Patentinhaber: BASF Aktiengesellschaft, 67063 Ludwigshafen (DE)
(72) Erfinder: OSTERTAG, Werner, D-6718 Gruenstadt (DE); SCHMIDT, Helmut, D-6522 Osthofen (DE)
(86) Internationale Anmeldenummer: EP9303351
(87) Internationale Veröffentlichungsnummer: WO9413489

(56) Entgegenhaltungen:
- EP-A- 0 353 544
- EP-A- 0 428 933
- FR-A- 2 429 292

## Beschreibung

Die vorliegende Erfindung betrifft die Verwendung von speziellen Interferenzpigmenten in Kombination mit streuenden Farbpigmenten, welche die Komplementärfarbe zur Reflexionsfarbe der Interferenzpigmente aufweisen, zur Herstellung von fälschungssicheren, insbesondere schwer oder nicht kopierbaren Wertschriften.

Die Herstellung fälschungssicherer Wertschriften, z.B. Papiergeld, Briefmarken, Schecks, Steuermarken, Scheckkarten, Bahn- oder Flugtickets, Kreditkarten, Telefonkarten, Lotterielose, Aktien, Geschenk-Zertifikate, Ausweise oder Identifikationskarten, ist angesichts der Einführung immer leistungsfähigerer Farbkopierer und den damit zusammenhängenden Fälschungsmöglichkeiten von zunehmender Bedeutung.

Der Wunsch nach fälschungssicheren Wertschriften wurde in der Vergangenheit auf vielfältige Weise verfolgt. Beispielsweise wurden Magnetpigmente oder Fluoreszenzfarbstoffe zur Charakterisierung der Originale angewandt. Diese Kennzeichnungen haben aber den Nachteil, daß ihr Vorhandensein nicht unmittelbar visuell, sondern nur mit Hilfe entsprechender mehr oder weniger aufwendiger Leseapparate erkennbar ist. Das gleiche gilt für Kennzeichnungen mit IR- oder UV-Farbstoffen oder -Pigmenten.

Von größerem Interesse sind daher Kennzeichnungen, die ohne Hilfsmittel mit bloßem Auge ausreichend sicher erkennbar sind und leicht eine Unterscheidung des Originals von der Kopie ermöglichen. In der Praxis sind hier Wasserzeichen - silbern glänzende Metallstreifen, die in der Kopie aufgrund der Totalreflexion des Lichtes schwarz wiedergegeben werden - oder Hologramme angewendet worden. Der Nachteil dieser Kennzeichnungen ist aber, daß sie sich leicht imitieren lassen oder im Falle der Hologramme teuer und anfällig für Beschädigungen sind. In der jüngsten Vergangenheit wurden darüber hinaus zur besonderen Kennzeichnung der Echtheit auch einfache Interferenzpigmente verwendet. Bei Draufsicht sind die über hellem Untergrund applizierten Interferenzpigmente aber praktisch nicht wahrnehmbar, was für den Betrachter ein Nachteil ist, da er das exakte Feld der Kennzeichnung nur mit Schwierigkeiten ausmachen kann und die Kennzeichnung deshalb leicht übersieht.

Interferenzpigmente im herkömmlichen Sinn (beispielsweise in der US-A-3 087 827 beschrieben) sind plättchenförmige Glanzpigmente, die vorwiegend aus einem Glimmersubstrat bestehen, das mit einer Schicht aus hochbrechendem Material, z.B. Rutil, Zirkondioxid oder Zinndioxid, belegt ist, wobei die Schicht eine bestimmte Dicke aufweist (in der Regel >50 nm), so daß "Farben dünner Plättchen" entstehen. Interferenzpigmente müssen ausgerichtet appliziert werden. Die Intensität des Farbeindrucks von Interferenzfarbpigmenten ist, verglichen mit derjenigen von streuenden Farbpigmenten, jedoch gering. Sie zeigen ein winkelabhängiges Reflexionsmaximum. Derartige Interferenzpigmente werden seit vielen Jahren in der Kosmetik und im Kunststoffbereich angewandt.

In der US-A-3 087 828 sind mit einer hochabsorbierenden Kohlenstoffschicht belegte Interferenzpigmente beschrieben, jedoch sind diese Pigmente nie im Wertschriftenbereich angewandt worden.

In der EP-A-353 544 werden Interferenzpigmente, die eine Metallbeschichtung aufweisen, als für den Sicherheitsdruck geeignet beschrieben, jedoch werden diese Interferenzpigmente nicht in Kombination mit bestimmten Farbpigmenten eingesetzt.

Bekannt geworden sind außerdem Mehrschichtpigmente, die einen deutlichen winkelabhängigen Farbwechsel zeigen und durch Pulverisierung von vom Substrat abgelösten dünnen Mehrschichtfilmen, sogenannter Thin Film Security Devices, hergestellt werden (US-A-4 434 010, US-A-5 059 245). Das optische Prinzip solcher Pigmente beruht auf dem des Transmissions-Filters. Die Schichtenfolge solcher Pigmente umfaßt im typischen Fall eine niedrigbrechende dielektrische Schicht, z.B. Siliciumdioxid, eine semitransparente reflektierende Metallschicht, z.B. aus Titan, Aluminium oder Chrom, eine niedrigbrechende dielektrische Schicht, z.B. aus Siliciumdioxid, eine hochreflektierende opake Metallschicht, z.B. Aluminium oder Titan, eine niedrigbrechende dielektrische Schicht, z.B. Siliciumdioxid, eine semitransparente reflektierende Metallschicht, z.B. Aluminium, Chrom oder Titan, und eine niedrigbrechende dielektrische Schicht, z.B. Siliciumdioxid.

Derartige Pigmente haben jedoch den Nachteil, daß sie teuer und nicht stabil gegen Alkali sind und außerdem meist nicht die gewünschte Säureechtheit aufweisen.

Aufgabe der vorliegenden Erfindung war die Bereitstellung geeigneter Pigmente oder Pigmentkombinationen für das Anwendungsgebiet der fälschungssicheren Markierung von Wertschriften, so daß vor allem das Kopieren dieser Wertschriften mit leistungsfähigen Kopierern erschwert oder durch Farbtonverfälschung unmöglich gemacht wird.

Es wurde nun gefunden, daß Interferenzpigmente auf der Basis von mehrfach beschichteten, plättchenförmigen, silikatischen Substraten mit
A) einer ersten Schicht aus farblosem oder selektiv absorbierendem, hochbrechendem Metalloxid,
B) einer zweiten, nicht selektiv absorbierenden, semitransparenten Schicht, im wesentlichen bestehend aus Kohlenstoff, Metall und/oder Metalloxid, und gegebenenfalls
C) einer dritten Schicht aus farblosem oder selektiv absorbierendem Metalloxid,
in Kombination mit streuenden Farbpigmenten, welche die Komplementärfarbe zur Reflexionsfarbe der Interferenzpigmente aufweisen, vorteilhaft zur Herstellung von fälschungssicheren, insbesondere schwer oder nicht kopierbaren Wertschriften verwendet werden können.

Bei den Interferenzpigmenten handelt es sich um an sich bekannte Produkte. Sie sind zusammen mit Herstellvorschriften z.B. in der US-A-3 087 827, US-A-3 087 828 oder in der älteren deutschen Patentanmeldung DE-A-41 41 069 beschrieben.

Geeignete plättchenförmige, silikatische Substrate sind insbesondere helle oder weiße Glimmer, wobei Schuppen von, vorzugsweise naß vermahlenem, Muskovit besonders bevorzugt sind. Selbstverständlich sind auch andere natürliche Glimmer, wie Phlogopit oder Biotit, künstliche Glimmer oder Talk- oder Glasschuppen geeignet.

Diese Substrate sind bereits mit einer ersten Schicht aus hochbrechendem, farblosem oder selektiv absorbierendem (d.h. nicht schwarzem) Metalloxid, beispielsweise Titan-, Zirkon-, Zinn-, Chrom-, Eisen-, Aluminium-, Silicium- oder Zinkoxid, Wismutoxychlorid oder deren Mischungen belegt. Bevorzugt sind dabei Beschichtungen mit Eisen(III)oxid oder Zirkondioxid und besonders bevorzugt mit Titandioxid.

Diese einfach beschichteten Pigmente sind allgemein bekannt und beispielsweise in der DE-C-1 467 468, EP-A-45 851, DE-A-3 237 264 oder DE-A-3 617 430 beschrieben. Metalloxidbeschichtete Glimmerplättchen sind auch unter dem Namen Iriodin® (E. Merck, Darmstadt), Flonac® (Kemira Oy, Pori, Finnland) oder Mearlin® (Mearl Corporation, Ossining, New York) im Handel.

Die zweite, nicht selektiv absorbierende, transparente Schicht kann aus Kohlenstoff, Metallen, beispielsweise solchen, die durch Gasphasenzersetzung flüchtiger Verbindungen aufgebracht werden können, wie Eisen, Kobalt, Nickel, Chrom, Molybdän oder Wolfram, oder schwarzen Metalloxiden, wie Eisenoxid, Magnetit, Nickeloxid, Kobaltoxiden (CoO, Co₃O₄), Vanadinoxiden (VO₂, V₂O₃) oder deren Mischungen, insbesondere Eisen und Magnetit, bestehen. Die Anwendung von im wesentlichen mit Kohlenstoff beschichteten Interferenzpigmenten ist bevorzugt.

Die zur Anwendung gelangenden Interferenzpigmente können noch eine dritte Schicht aus farblosem oder selektiv absorbierendem Metalloxid aufweisen. Geeignete Metalloxide für diese Schicht sind z.B. Titan-, Zirkon-, Zinn-, Chrom-, Eisen-, Aluminium-, Silicium- oder Zinkoxid oder deren Mischungen. Besonders bevorzugt sind Eisen(III)oxid, Titan- oder Zirkondioxid oder deren Gemische. Im Einzelfall wird die dritte Schicht aus Oxid zweckmäßigerweise auf die zweite, schwarze Schicht abgestimmt.

Bevorzugt kommen solche Interferenzpigmente zur Anwendung, die 2 Schichten aufweisen.

Weiterhin bevorzugt kommen solche Interferenzpigmente zur Anwendung, die, bezogen auf das Gewicht des Glanzpigments, 0,03 bis 5 Gew.-%, vorzugsweise 0,1 bis 0,6 Gew.-%, einer zweiten nicht selektiv absorbierenden Schicht aufweisen. Dies entspricht einer Schichtdicke der zweiten Schicht von 1 bis 30 nm.

Weiterhin bevorzugt kommen solche Interferenzpigmente zur Anwendung, die eine mittlere Partikelgröße (bezogen auf den größten Partikeldurchmesser) von 5 bis 30 µm aufweisen.

Unter streuenden Farbpigmenten werden pigmentäre Farbmittel verstanden, deren Wirkungsmechanismus hauptsächlich auf selektiver Absorption oder diffuser Streuung beruht. Als streuende Farbpigmente können dabei auch mit transparenten Farbmitteln überfärbte streuende Weißpigmente dienen.

Geeignete streuende Farbpigmente sind sowohl anorganische wie auch organische Pigmente, die eine Brechzahl n, die größer als 1,65 ist, aufweisen.

Anorganische Pigmente sind z.B. Eisenoxide, Bismutvanadat, farbige Spinelle oder Nickeltitangelb.

Organische Pigmente sind beispielsweise solche aus der Klasse der Monoazopigmente (z.B. Produkte, die sich von Acetessigarylidderivaten oder von β-Naphtholderivaten ableiten), verlackten Monoazofarbstoffe, wie verlackte β-Hydroxynaphthoesäurefarbstoffe, Disazopigmente, kondensierten Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder verlackten basischen Farbstoffe, wie verlackte Triarylmethanfarbstoffe, sofern sie eine Brechzahl n, die größer als 1,65 ist, aufweisen. Ansonsten sind diese Pigmente zur Überfärbung streuender Weißpigmente geeignet.

Als zur Überfärbung geeignetes streuendes Weißpigment ist insbesondere Titandioxid zu nennen.

Die erfindungsgemäße Verwendung der Interferenzpigmente hat für den visuell Wahrnehmenden zwei Vorteile. Einmal läßt sich das pigmentierte Markierungsfeld unschwer unter jedem Winkel, auch über transparentem und hellem Untergrund, erkennen. Zum anderen bewirkt die Beschichtung, daß die reflektierte Interferenzfarbe wesentlich deutlicher und viel intensiver wahrgenommen werden kann. Des weiteren bewirkt die Beschichtung von Wertpapieren mit den erfindungsgemäß anzuwendenden Interferenzpigmenten, daß beim Kopieren, selbst mit leistungsstarken Farbkopierern, Fehlfarben entstehen, die in Kombination mit den erfindungsgemäßen Farbpigmenten unsichtbar werden.

Kopiert man beispielsweise eine mit einem violetten Interferenzpigment und streuendem Weißpigment markierte Wertschrift (Aufbau des Interferenzpigmentes: Glimmersübstrat/115 nm Rutil/20 nm Kohlenstoff; streuendes Weißpigment: Rutil), so wird das violett reflektierende Interferenzpigment über weißem streuendem Untergrund gelb wiedergegeben. Wird der Untergrund anstelle von Titandioxid mit Eisenrot, Kobaltspinell-Blau oder mit halogeniertem Phthalocyanin pigmentiert, so entstehen auf der Farbkopie bräunliche, grünliche oder gelbgrüne Fehlfarben. Das gleiche Ergebnis wird erzielt, wenn das streuende Weißpigment mit Farbstoffen, z.B. Papierfarbstoffen, rot, blau oder gelb überfärbt wird.

Besonders vorteilhaft läßt sich die erfindungsgemäße Kombination der Interferenzpigmente mit den streuenden Farbpigmenten, welche die Komplementärfarbe zur Reflexionsfarbe der Interferenzpigmente aufweisen, nutzen, wenn man die Interferenzpigmente auf einem Untergrund von Farbpigment appliziert. Wird beispielsweise ein Interferenzpigment mit einer blauvioletten Reflexionsfarbe auf einen mit gelb streuendem Pigment eingefärbten Untergrund aufgetragen, so ist auf der Farbkopie außer gelb praktisch nichts zu sehen, d.h. das blauviolette Interferenzpigment ist gewissermaßen unsichtbar.

Um die oben beschriebenen Effekte zu nutzen, darf die schwarze absorbierende Schicht der Interferenzpigmente nicht zu dick sein. Sie muß für einfallendes Licht semitransparent sein. Pigmente mit hohen, einfallendes Licht totalabsorbierenden Schichtdicken werden beim Farbkopieren schwarz wiedergegeben. Die in der Kopie schwarze Wiedergabe eines Pigmentes mit roter, blauer oder grüner Reflexionsfarbe ist auch als Fehlfarbe einzuordnen.

Für die Herstellung von fälschungssicheren Wertschriften werden vorzugsweise solche Interferenzpigmente verwendet, die eine violette oder blaue Reflexionsfarbe aufweisen. Sie werden in Kombination mit solchen streuenden Farbpigmenten angewandt, die einen grüngelben oder gelben Farbton aufweisen.

Die Applikation der oben beschriebenen Farbmittel erfolgt über die Herstellung einer Druckfarbe und anschließendes Verdrucken mit Hilfe industrieüblicher Druckverfahren, z.B. mittels Siebdruck, Tiefdruck, Bronzierdruck, Flexodruck oder Offsetdruck.

Obwohl die Herstellung von kopiersicheren Wertschriften mit Interferenzpigmenten und streuenden Farbpigmenten stets dann am günstigsten ist, wenn die Interferenzpigmente ganz oben zu liegen kommen, d.h. über einen mit streuendem Farbpigment bedruckten Untergrund gedruckt werden, so läßt sich der gewünschte Effekt der Farbtonverfälschung durchaus auch feststellen, wenn Interferenzpigment und streuendes Farbpigment gemischt werden. Allerdings ist der Effekt dann nicht so deutlich.

Die folgenden Beispiele sollen die Erfindung naher erläutern.

### Beispiel 1

100 g des handelsüblichen Glimmerpigments Iriodin® 9225 Rutil Perlblau (E. Merck, Darmstadt; mittlere Partikelgröße 19 µm, spezifische Oberfläche 3 m²/g, Muskovit, Rutil-Beschichtung) wurden unter Rühren in eine Lösung von 4 g Sorbit in 100 ml Wasser eingetragen. Die breiige Masse wurde 10 h im Trockenschrank bei 160°C getrocknet, dann grob zerkleinert und in einem Drehkugelofen 70 min in Stickstoffatmosphäre auf 460°C erhitzt. Anschließend wurde das Produkt 3 h auf dieser Temperatur gehalten und dann unter Stickstoff abgekühlt.

Das erhaltene Pigment ist intensiv blau gefärbt. Es weist einen Kohlenstoffgehalt von 0,5 Gew.-% auf. Elektronenmikroskopische Aufnahmen zeigen, daß die Glimmerpartikel gleichmäßig mit Kohlenstoff belegt sind. Aus der Kohlenstoffbelegung errechnet sich eine Schichtdicke von 2,5 nm.

Das Pigment wurde anschließend im Bronzierverfahren auf ein gelbes, mit Bismutvanadatpigment-haltiger Druckfarbe flächig bedrucktes Papier aufgebracht. Hierbei wurde das gelbe, mit Bismutvanadat-Pigment beschichtete Papier mit handelsüblichem nichtpigmentiertem Offsetbindemitel (Zusammensetzung: Maleinatharz/Leinöl/Mineralöl) bedruckt und anschließend mit dem oben hergestellten blauen Glanzpigment bestäubt. Während das Pigment auf den bindemittelbedruckten Stellen haften bleibt, lassen sich die nichtbedruckten Stellen leicht mit einer Samtwalze vom Pigment befreien.

Der mit dem Glanzpigment hergestellte Druck erscheint glänzend blau. Wird er in einem Farbkopierer der Marke Canon CLC 500 kopiert, so läßt sich außer Gelb keine weitere Farbe erkennen. Die mit dem Glanzpigment bedruckten Stellen des Papiers sind in der Kopie praktisch unsichtbar.

### Beispiel 2

Analog Beispiel 1 wurden 100 g des handelsüblichen Glimmerpigments Iriodin 9219 Rutil Perllila WR mit Kohlenstoff belegt, wobei ein intensiv lila gefärbtes Pigment erhalten wurde, und im Bronzierverfahren auf gelbes, mit Bismutvanadat bedrucktes Papier aufgebracht.

Der mit diesem Glanzpigment hergestellte Druck erscheint glänzend lila. Auf einer mit einem Farbkopierer (Canon CLC 500) erzeugten Kopie läßt sich außer Gelb keine weitere Farbe erkennen. Auch hier sind die mit dem Glanzpigment bedruckten Stellen in der Kopie praktisch unsichtbar.

### Beispiel 3

100 g des handelsüblichen Glimmerpigments Iriodin 231 Rutil Feingrün wurden unter Rühren in eine Lösung von 8 g Sorbit in 100 ml Wasser eingetragen. Die Mischung wurde im Trockenschrank bei 155°C getrocknet, dann mit einem Spatel desagglomeriert, in einem Drehkugelofen 80 min in einer Stickstoffatmosphäre auf 450°C erhitzt und unter Stickstoff in 4 h auf Raumtemperatur abgekühlt.

Das erhaltene Pigment zeigt eine intensiv grüne Reflexionsfarbe. Es weist einen Kohlenstoffgehalt von 0,8 Gew.-% auf. Die Kohlenstoffbelegung ist mit dem Elektronenmikroskop zu erkennen.

Das Pigment wurde durch Einrühren in eine handelsübliche alkoholische Bindemittellösung in eine Tiefdruckfarbe, enthaltend 52 Gew.-% Nitrocellulose/Ethanol/Dioctylphthalat und 8,5 Gew.-% Pigment, überführt.

Mit dieser Farbe wurde anschließend rotes, mit Fe₂O₃-haltiger Offsetfarbe beschichtetes, gestrichenes Papier bedruckt (Raster 54 L/cm 120°, Ätztiefe 40-45 µm).

## Patentansprüche

1. Verwendung von Interferenzpigmenten auf der Basis von mehrfach beschichteten, plättchenförmigen, silikatischen Substraten mit
A) einer ersten Schicht aus farblosem oder selektiv absorbierendem, hochbrechendem Metalloxid,
B) einer zweiten, nicht selektiv absorbierenden, semitransparenten Schicht, im wesentlichen bestehend aus Kohlenstoff, Metall und/oder Metalloxid, und gegebenenfalls
C) einer dritten Schicht aus farblosem oder selektiv absorbierendem Metalloxid,
in Kombination mit streuenden Farbpigmenten, welche die Komplementärfarbe zur Reflexionsfarbe der Interferenzpigmente aufweisen, zur Herstellung von fälschungssicheren Wertschriften.

2. Verwendung von Interferenzpigmenten nach Anspruch 1, dadurch gekennzeichnet, daß die zweite Schicht der Interferenzpigmente im wesentlichen aus Kohlenstoff besteht.

3. Verwendung von Interferenzpigmenten nach Anspruch 1, dadurch gekennzeichnet, daß die zweite Schicht eine Dicke von 1 bis 30 nm aufweist.

4. Verwendung von Interferenzpigmenten nach Anspruch 1, dadurch gekennzeichnet, daß das Interferenzpigment 2 Schichten aufweist.

## Claims

1. The use of interference pigments based on multiply coated plateletlike silicatic substrates comprising
A) a first layer comprising a colorless or selectively absorbing metal oxide with a high refractive index,
B) a second, non-selectively absorbing, semitransparent layer consisting essentially of carbon, a metal or a metal oxide, and optionally
C) a third layer comprising a colorless or selectively absorbing metal oxide,
in combination with scattering color pigments which are complementary in color to the reflection color of the interference pigments, for preparing forgeryproof documents.

2. A use as claimed in claim 1, wherefor the second layer of the interference pigments consists essentially of carbon.

3. A use as claimed in claim 1, wherefor the second layer is from 1 to 30 nm in thickness.

4. A use as claimed in claim 1, wherefor the interference pigment has 2 layers.

## Revendications

1. Utilisation, dans la fabrication de titres infalsifiables, de pigments d'interférence à base de substrats du type silicate en paillettes enduits plusieurs fois, portant
A) une première couche d'oxyde métallique très réfringent, incolore ou absorbant sélectivement la lumière,
B) une deuxième couche semi-transparente n'absorbant pas sélectivement la lumière, composée essentiellement de carbone, de métal et/ou d'oxyde métallique, et éventuellement
C) une troisième couche d'oxyde métallique incolore ou absorbant sélectivement la lumière,
en combinaison avec des pigments colorés dispersifs qui présentent la couleur complémentaire de la couleur de réflexion des pigments d'interférence.

2. Utilisation de pigments d'interférence selon la revendication 1, caractérisée en ce que la deuxième couche des pigments d'interférence se compose essentiellement de carbone.

3. Utilisation de pigments d'interférence selon la revendication 1, caractérisée en ce que la deuxième couche a une épaisseur de 1 à 30 nm.

4. Utilisation de pigments d'interférence selon la revendication 1, caractérisée en ce que le pigment d'interférence porte deux couches.
